(19) Europäisches Patentamt
European Patent Office
Office européen des brevets

(11) **EP 2 387 523 B1**

(12) **EUROPÄISCHE PATENTSCHRIFT**

(45) Veröffentlichungstag und Bekanntmachung des Hinweises auf die Patenterteilung:
**31.12.2014 Patentblatt 2015/01**

(51) Int Cl.:
***B60T 17/02*** *(2006.01)* ***G01L 27/00*** *(2006.01)*
***B60T 10/02*** *(2006.01)*

(21) Anmeldenummer: **10708930.2**

(22) Anmeldetag: **11.03.2010**

(86) Internationale Anmeldenummer:
**PCT/EP2010/001518**

(87) Internationale Veröffentlichungsnummer:
**WO 2010/102812 (16.09.2010 Gazette 2010/37)**

(54) **VERFAHREN ZUM BETREIBEN EINES HYDRAULISCHEN ODER PNEUMATISCHEN SYSTEMS**

METHOD FOR OPERATING A HYDRAULIC OR PNEUMATIC SYSTEM

PROCÉDÉ POUR EXPLOITER UN SYSTÈME HYDRAULIQUE OU PNEUMATIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **13.03.2009 DE 102009012787**

(43) Veröffentlichungstag der Anmeldung:
**23.11.2011 Patentblatt 2011/47**

(73) Patentinhaber: **Voith Patent GmbH**
**89522 Heidenheim (DE)**

(72) Erfinder:
• **MAYER, Andreas-Nicolas**
**89160 Dornstadt (DE)**

• **BETZ, Jürgen**
**74589 Satteldorf (DE)**
• **WASSERMANN, Mirco**
**74544 Michelbach an der Bilz (DE)**
• **BISCHOFF, Markus**
**74405 Gaildorf-Ottendorf (DE)**
• **SCHERER, Roland**
**74564 Crailsheim (DE)**

(74) Vertreter: **Dr. Weitzel & Partner**
**Patent- und Rechtsanwälte mbB**
**Friedenstrasse 10**
**89522 Heidenheim (DE)**

(56) Entgegenhaltungen:
WO-A1-2005/066006    DE-A1- 19 757 594
DE-A1- 19 757 655    DE-A1-102005 056 939

**Beschreibung**

Die Erfindung betrifft ein Verfahren zum Betreiben eines hydraulischen oder pneumatischen Systems, mit den im Oberbegriff von Anspruch 1 und Anspruch 8 näher definierten Merkmalen.

Pneumatische und/oder hydraulische Systeme mit Speichereinrichtungen und entsprechenden Ventilen sind aus dem allgemeinen Stand der Technik bekannt. Häufig weisen derartige Systeme außerdem Sensoren und/oder Einrichtungen auf, welche es erlauben, einen Druck im System und/oder die Position der Stellung der Ventileinrichtung zu erfassen. Als Beispiel für ein derartiges System soll hier ein Druckluftsystem beziehungsweise ein Druckluftversorgungssystem eines Kraftfahrzeuges genannt werden. Ein derartiges System ist beispielsweise aus der DE 10 2004 059 835 A1 bekannt.

Typisch für derartige Druckluftsysteme ist es dabei, dass diese einen Druckspeicher aufweisen, welcher je nach Fahrzustand von einem Kompressor entsprechend mit einem Vordruck aufgeladen wird. Häufig ist es dabei so, dass die Drucksensoren auf der für die Regelung des pneumatischen Systems relevanten Seite der Ventileinrichtung angeordnet sind. Da dies typischerweise nicht die Seite ist, auf welcher in einem Druckspeicher der Vorratsdruck bereitgehalten wird, ist für diesen sehr häufig kein Sensor vorgesehen. Wenn dies der Fall ist, dann kann über eine spätere Druckregelstrecke die Verstärkung der Ventileinrichtungen als Stellventile nicht erfasst werden. Damit wird die Regelung entsprechend erschwert, da kein Eingangsdruck für das System bekannt ist. Außerdem kann ohne einen derartigen Drucksensor im Bereich des Druckspeichers nicht festgestellt werden, ob ein nicht ausreichender Druck im Bereich nach den Ventileinrichtungen auf einen Fehler im System zurückzuführen ist, oder lediglich auf einen zu geringen Druck im Druckspeicher.

Dies zusammen mit der Tatsache, dass die vom Drucksensor erfassten Werte und/oder die Stellung der Ventileinrichtung typischer Weise nur in dem jeweiligen Moment der Erfassung bekannt sind, führt dazu, dass Fehler in derartigen Systemen nicht oder nur durch zusätzliche Sensorik zur Diagnose zu erfassen sind.

Zum weiteren allgemeinen Stand der Technik wird außerdem auf die WO 2005/066006 A1 verwiesen. Hierin wird ein Verfahren zur Überwachung einer Bremsmomentänderung eines Retarders beschrieben. Die Bremsmomentänderung wird durch einen Stelldruck-Regelkreis mit einem darin installierten Drucksensor geregelt. Der zeitliche Verlauf des Stelldrucks des Retarders wird dynamisch erfasst, wobei dieser Verlauf mit einem vorgegebenen Sollverlauf verglichen wird. In Abhängigkeit des durchgeführten Soll/Ist-Vergleichs wird bei der Erfüllung von vorgegebenen Kriterien eine Warnmeldung ausgegeben und/oder ein zukünftiges Einschalten des Retarders verhindert.

Zum weiteren Stand der Technik wird außerdem auf die DE 197 57 655 A1 verwiesen, welche als nächstliegender Stand der Technik angesehen wird. In dieser Schrift wird in einem hydraulischen System mit einem Druckspeicher und einer Ventileinrichtung beschrieben. Über einen Sensor wird ein Druckwert aufgenommen und mit Referenzwerten in Form von berechneten Druckwerten verglichen. Anhand einer Übereinstimmung oder einer Differenz wird dann auf die Funktion oder Fehlfunktion des Drucksensors geschlossen.

Zum weiteren Stand der Technik soll außerdem auf die DE 197 57 594 A1 sowie die DE 10 2005 056939 A1 verwiesen werden.

Der hier vorliegenden Erfindung liegt nun die Aufgabe zugrunde, die oben genannten Nachteile zu vermeiden und ohne eine zusätzliche Sensorik Größen bereitzustellen, welche zur Optimierung der Regelung und/oder der Diagnose von Fehlern genutzt werden können.

Erfindungsgemäß wird diese Aufgabe durch ein Verfahren mit den im kennzeichnenden Teil von Anspruch 1 oder Anspruch 8 genannten Merkmalen gelöst. Ferner ist in Anspruch 12 eine besonders geeignete Verwendung für ein derartiges erfindungsgemäßes Verfahren angegeben. Weitere vorteilhafte Ausgestaltungen des erfindungsgemäßen Verfahrens und/oder der Verwendung ergeben sich ferner aus den Unteransprüchen.

Bei der Lösung gemäß Anspruch 1 lässt sich unter Nutzung wenigstens eines Sensors, entweder zur Erfassung einer Stellung der Ventileinrichtung oder zur Erfassung eines Drucks auf der dem Druckspeicher abgewandten Seite einer Ventileinrichtung durch ein einfaches Vergleichen des erfassten Werts, oder falls beide Werte erfasst werden der erfassten Werte, mit entsprechenden Referenzwerten auf eine Fehlfunktion des Systems schließen. Der oder die erfassten Werte erlauben es somit, eine Fehlerdiagnose zu betreiben. Dabei wird zumindest einer der Werte über der Zeit mehrfach erfasst und abgespeichert wird, wobei der zeitliche Verlauf des wenigstens einen Wertes mit einem gespeicherten Referenzverlauf verglichen wird. Durch diese über der Zeit oder einen gewissen Zeitraum kontinuierliche Erfassung und Speicherung der Werte kann ein entsprechender Druckverlauf und/oder Verlauf der Stellung der Ventileinrichtung aufgenommen werden. Dieser Verlauf kann mit einem Referenzverlauf verglichen werden, welcher für den jeweiligen Wert unter günstigen Betriebsbedingungen erfasst wurde und in einer Steuereinrichtung entsprechend hinterlegt ist. Alternativ hierzu kann auch ein theoretisch ermittelter Referenzverlauf verwendet werden. Kommt es nun zu einer Abweichung des erfassten Werts gegenüber diesem Referenzverlauf oder typischerweise gegenüber einem mit einer Toleranz versehenen Referenzverlauf, so kann daraus zurückgeschlossen werden, dass es im System zu einem Fehler gekommen ist. Typische Fehler wären beispielsweise Leckagen, defekte - nicht überwachte - Ventile oder dergleichen.

Dabei ermöglicht es das erfindungsgemäße Verfahren, die benötigten Werte, welche zur Fehlerdiagnose genutzt werden können, mittels typischerweise ohnehin vorhandener Sensoren zu erfassen, wobei im Sinne der Erfindung unter Sensoren nicht nur gegenständliche Sensoren zu verstehen sind, sondern auch die geeignete Erfassung von Werten, welche mittelbar mit der Stellung der Ventileinrichtung oder dem Druck in der dem Druckspeicher abgewandten Seite der Ventileinrichtung zusammenhängen. Solche Werte können beispielsweise die Steuerströme digitaler pulsierend angesteuerter Ventile im Falle der Stellung der Ventileinrichtung oder entsprechender Druckaufnehmer als gegenständliche Sensoren für den Druck sein. Andere Möglichkeiten zur Erfassung des oder der benötigten Werte, welche allgemein üblich und fachmännisch sind, fallen dabei ebenso unter die Bezeichnung "Sensoren" im Sinne der hier vorliegenden Erfindung.

In einer sehr günstigen Ausgestaltung des erfindungsgemäßen Verfahrens kann es außerdem vorgesehen sein, dass bei einer Abweichung des/der erfassten Wert(e) und/oder des zeitlich erfassten Verlaufs um eine geringe vorgegebene Toleranz von den Referenzwerten bzw. Referenzverläufen der/die erfassten Wert(e) und/oder der erfasste zeitliche Verlauf als neuer Referenzwert gespeichert wird.

Diese besonders vorteilhafte Ausgestaltung des erfindungsgemäßen Verfahrens erlaubt es, dass das Verfahren selbstlernend ausgebildet ist und geringe tolerierbare Abweichungen als neuere Referenzwerte verwendet. Damit kann bei geeigneter Wahl des Toleranzwerts ein System geschaffen werden, das selbstlernend auf schleichende Veränderungen, wie zum Beispiel eine Alterung oder einen im normalen Betrieb auftretenden und die Funktion nicht beeinträchtigenden Verschleiß, reagieren kann. Damit kann das erfindungsgemäße Verfahren in dieser vorteilhaften Ausgestaltung so eingesetzt werden, dass es durch eine geeignete Wahl des Toleranzwerts tolerierbare beispielsweise durch Alterung auftretende Änderungen akzeptiert und bei Änderungen, welche so groß sind, dass eine Warnmeldung oder dergleichen nötig ist, eine solche ausgibt. Bei der Fehlerdiagnose kann diese selbstlernende Ausgestaltung des Verfahrens von entscheidendem Vorteil sein, da nicht jede kleine und für das System an sich unbedenkliche Änderung bereits zu einer Warnung oder einem Stillsetzen des Systems führt, auf welches dann durch entsprechend zeitaufwendige und teure Wartungsmaßnahmen reagiert werden müsste.

Die Variante gemäß Anspruch 8 sieht vor, dass sowohl der Sensor zur Erfassung eines Wertes, welcher zumindest mittelbar mit dem Druck zusammenhängt, als auch der Sensor zur zumindest mittelbaren Erfassung der Stellung der Ventileinrichtung vorhanden sind und genutzt werden, wobei der Sensor zur Erfassung eines Wertes, welcher zumindest mittelbar mit dem Druck zusammenhängt, auf der dem Druckspeicher abgewandten Seite der Ventileinrichtung angeordnet ist, und wobei anhand der beiden erfassten Werte der Druck in dem Druckspeicher bestimmt wird.

Unter Nutzung wenigstens eines Sensors, entweder zur Erfassung einer Stellung der Ventileinrichtung oder zur Erfassung eines Drucks auf der dem Druckspeicher abgewandten Seite einer Ventileinrichtung, lässt sich mit Hilfe des erfindungsgemäßen Verfahrens durch ein einfaches Vergleichen des erfassten Werts, oder falls beide Werte erfasst werden der erfassten Werte, mit entsprechenden Referenzwerten auf eine Fehlfunktion des Systems und/oder auf den Druck im Bereich des Druckspeichers zurückschließen. Der oder die erfassten Werte erlauben es somit, eine Fehlerdiagnose zu betreiben.

Somit lässt sich auf den Druck im Bereich des Druckspeichers zurückschließen. Die erfassten Werte erlauben es somit aufgrund eines weiteren bekannten Wertes die Regelung im System entsprechend zu verbessern.

Mit dieser Variante des erfindungsgemäßen Verfahrens ist es möglich, über zwei ohnehin vorhandene Sensoren den Druck nach der Ventileinrichtung sowie die Stellung der Ventileinrichtung zu erfassen. Mit diesen beiden Werten wird es nun möglich, beispielsweise anhand einer simulierten Regelstrecke oder anhand einer modellbasierten Berechnung zu ermitteln, wie groß der Druck im Druckspeicher ist. Da das Vorrats-Drucksystem typischerweise über keinen eigenen Sensor verfügt, kann dieser Wert für vielfältige Zwecke genutzt werden, insbesondere jedoch zum optimierten Regeln des gewünschten Drucks auf der dem Druckspeicher abgewandten Seite der Ventileinrichtung. Dadurch, dass auf den Vorratsdruck zurückgeschlossen werden kann und zu einem späteren Zeitpunkt der Momentandruck auf der andern Seite der Ventileinrichtung gemessen wird, kann die Verstärkung der Stellglieder, hier also der Ventileinrichtung, ermittelt werden, so dass die Regelung dementsprechend optimiert werden kann. Außerdem kann erfasst werden, ob der Vorratsdruck ausreichend ist, um den gewünschten Stelldruck hinter der Ventileinrichtung bereitzustellen. Ist dieser nicht ausreichend, so kann trotz vollständig geöffneter Ventileinrichtung der gewünschte Stelldruck nicht erreicht werden. Ist dies auf Grund der vorteilhaften Ausgestaltung des erfindungsgemäßen Verfahrens bekannt, kann entsprechend reagiert werden, so dass kein permanentes Takten oder Öffnen der Ventileinrichtung auftritt. Dies schont die Lebensdauer der Ventileinrichtung und ermöglicht es außerdem, unnötigen Stromverbrauch und unnötige Geräuschemissionen zu vermeiden.

Um das erfindungsgemäße Verfahren zur Fehlerdiagnose und/oder Verbesserung der Regelung ideal nutzen zu können, muss lediglich eine geringfügige Anpassung in einer Steuerungssoftware für das Betriebsverfahren vorgenommen werden. Weitere Hardware in Form von Sensoren, Leitungen oder dergleichen ist nicht notwendig, so dass das System einfach und kostengünstig ausgeführt werden kann.

Außerdem ist es möglich, das erfindungsgemäße Verfahren durch ein einfaches Update der Betriebssoftware auch in bereits bestehende hydraulische oder pneumatische Systeme zu integrieren.

Das erfindungsgemäße Verfahren ist besonders gut geeignet, um ein Druckluftsystem zu betreiben, welches in einem Kraftfahrzeug, insbesondere einem Nutzfahrzeug installiert ist. Da hier über das Druckluftsystem häufig die Bremsen oder andere sicherheitsrelevante Elemente betrieben werden, ist hier das Erkennen von eventuellen Fehlern oder Leckagen eine Aufgabe von besonderer Bedeutung. Wie oben bereits ausgeführt, ist das erfindungsgemäße Verfahren in der Lage, ohne einen zusätzlichen Aufwand an Sensoren eine derartige Diagnose und/oder Verbesserung der Regelung zu ermöglichen. Insbesondere bei einem sicherheitsrelevanten System, wie dem Druckluftsystem in einem Fahrzeug, ist dies ein entscheidender Vorteil. Da keine zusätzlichen Sensoren benötigt werden, ist der Aufbau darüber hinaus einfach, effizient und kostengünstig.

Sollten dennoch weitere Sensoren vorhanden sein, so kann das erfindungsgemäße Verfahren in diesem Fall besonders vorteilhaft als Rückfalllösung eingesetzt werden, sodass die sicherheitsrelevanten bzw. sicherheitsgerichteten Diagnosesysteme durch das erfindungsgemäße Verfahren eine zusätzliche Redundanz erfahren.

Weitere vorteilhafte Ausgestaltungen des erfindungsgemäßen Verfahrens sowie der Verwendung desselben, ergeben sich aus den restlichen Unteransprüchen sowie aus den Ausführungsbeispielen, welche nachfolgen anhand der Figuren näher erläutert werden.

Dabei zeigen:

Figur 1     eine stark schematisierte Darstellung eines hydraulischen oder pneumatischen Systems, welches mit einem Verfahren gemäß der Erfindung betrieben werden kann;

Figur 2     eine schematische Darstellung einer ersten Ausführungsform der Erfindung zur Berechnung eines Druckwerts; und

Figur 3     einen Vergleich eines beispielhaften Referenzverlaufs mit einem beispielhaften gemessenen Verlauf.

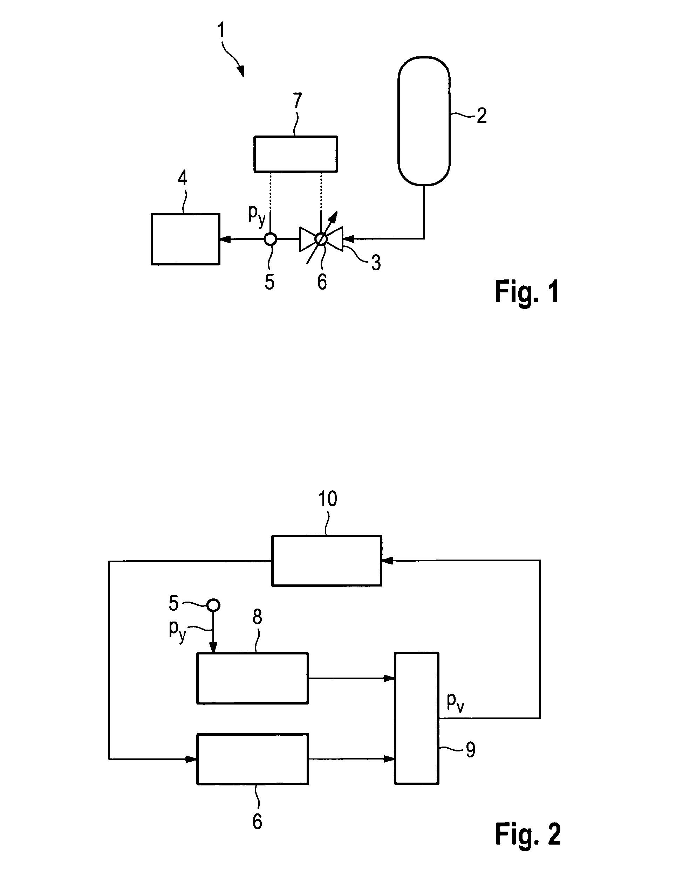

In der Figur 1 ist stark schematisiert ein pneumatisches oder hydraulisches System 1 dargestellt. Ohne dass die Erfindung hierdurch auf pneumatische Systeme eingeschränkt werden soll, wird das beispielhafte System in Figur 1 nachfolgend als pneumatisches System 1 beschrieben, wobei die erfindungsgemäße Ausgestaltung von jedem Fachmann entsprechend analog auf ein hydraulisches System angewandt werden kann.

Das pneumatische System der Figur 1 besteht im Wesentlichen aus einem Druckspeicher 2 einer Ventileinrichtung 3 sowie einem pneumatischen Nutzsystem 4, in welcher durch den über die Ventileinrichtung 3 steuer- oder regelbar bereitgestellten Druck gewünschte Vorgänge ablaufen. Beispielhaft für derartige Vorgänge im Nutzsystem 4 kann die Ansteuerung von entsprechenden Ventilen genannt werden, welche beispielsweise ein Bremssystem eines Nutzfahrzeugs steuern. So kann in dem Nutzsystem 4 insbesondere ein Aufbau von pneumatischen Ventileinrichtungen vorgesehen sein, welche durch den an ihnen anliegenden, durch die steuer- oder regelbare Ventileinrichtung 3 bereitgestellten Stelldruck $p_y$ einen entsprechenden Durchfluss beispielsweise eines Arbeitsmediums in einen hydrodynamischen Retarder steuern beziehungsweise regeln. Alternativ dazu sind in dem Nutzsystem 4 jedoch auch andere Möglichkeiten zur Nutzung denkbar, beispielsweise die direkte Druckbeaufschlagung einer Membran mit Druckluft, welche dann durch eine entsprechende Verformung ein Arbeitsmedium, wie beispielsweise Öl, in einen hydrodynamischen Retarder drückt oder die Vorsteuerung eines Regelventils, beispielsweise über einen Regelkolben. Dabei sind neben dem Arbeitsmedium Öl selbstverständlich auch andere Arbeitsmedien wie insbesondere Wasser beziehungsweise ein Wasserkühlmittelgemisch aus dem Kühlkreislauf eines Fahrzeugs denkbar.

Grundsätzlich soll das Nutzsystem 4 jedoch nicht auf derartige Anwendungen eingeschränkt werden, es könne jegliche anderen denkbaren Anwendungen in dem Nutzsystem realisiert werden, welche anhand des über die Ventileinrichtung 3 bereitgestellten Stelldrucks $p_y$ entsprechend gesteuert werden.

In dem hier dargestellten pneumatischen System 1 sind außerdem zwei Sensoren dargestellt. Hierbei handelt es sich um einen Drucksensor 5 sowie einen Sensor 6 zur Erfassung einer Stellung der Ventileinrichtung 3. Beide Sensoren können dabei als herkömmliche Sensoren ausgebildet sein. Es sind jedoch auch alternative Möglichkeiten denkbar, bei denen die entsprechenden Werte nur mittelbar erfasst werden. Dies kann insbesondere bei der Ventileinrichtung 3 dadurch erfolgen, dass die Ventileinrichtung 3 als digitale Ventileinrichtung ausgebildet ist, welche lediglich die Zustände offen und geschlossen kennt. Dann kann über eine entsprechende Elektronik in der Ansteuerung der Ventileinrichtung 3 dieser Zustand beziehungsweise der für die Ventileinrichtung 3 bereitgestellte Stellstrom $I_{St}$ erfasst werden, so dass hierdurch mittelbar die entsprechende Stellung der Ventileinrichtung 3 bekannt ist, ohne dass hierfür ein in Hardware realisierter Sensor notwendig wäre. Der Begriff Sensor für die Sensoren 5, 6 soll also nicht nur Hardwaresensoren umfassen, sondern steht stellvertretend auch für eine alternative Erfassung der entsprechenden Werte über andere Kenngrößen, welche zumindest mittelbar mit diesen Werten zusammenhängen und daher über einfache Berechnungen oder entsprechende Kennfelder zu den durch die "Sensoren" 5, 6 erfassten Werten führen.

Die beiden Sensoren 5, 6 korrespondieren dabei mit einer Steuereinrichtung 7, durch welche der Stelldruck $p_y$ für das Nutzsystem 4 entsprechend gesteuert oder geregelt werden kann. Die Steuereinrichtung 7 ist dabei als Steuergerät ausgebildet, welches außerdem über die Möglichkeit verfügt, entsprechende Softwareprogramme ablaufen zu lassen und Werte entsprechend zu speichern.

Für die Realisierung der nachfolgend dargelegten Ausführungsbeispiele der Erfindung sind dabei nicht in allen Fällen beide Sensoren 5, 6 notwendig. Zum besseren Verständnis wurden diese in Figur 1 jedoch beide eingezeichnet. Je nach Erläuterungen bei den nachfolgend dargestellten Ausführungsbeispielen ergibt sich jedoch die Situation, dass lediglich einer der beiden Sensoren 5, 6 oder bei bestimmten Ausführungsformen auch beide der Sensoren 5, 6 vorhanden sein können beziehungsweise müssen.

Anhand des in Figur 2 dargestellten Ablaufs wird nun ein erstes Ausführungsbeispiel des erfindungsgemäßen Verfahrens beschrieben. Diesem ersten Ausführungsbeispiel liegt dabei insbesondere das Problem zugrunde, dass im Allgemeinen der Stelldruck $p_y$ über einen Regelkreis geregelt wird, wobei kein Druckniveau $p_V$ des Druckspeichers 2 bekannt ist. Dies führt dazu, dass auch die Verstärkung der Stellglieder beziehungsweise der Ventileinrichtung 3 nicht bekannt ist. Dadurch ist eine Anpassung der Regelparameter an diesen Istdruck $p_V$ im Druckspeicher 2 nicht möglich. Die Qualität der Regelung lässt sich daher nicht optimieren. Insbesondere ist es problematisch, wenn der Istdruck $p_V$ im Druckspeicher 2 unterhalb der geforderten Führungsgröße des Reglers liegt. Der Regelkreis läuft nämlich dann in seine Begrenzung, so dass die Ausgänge maximal geöffnet sind. Wird als Ventileinrichtung 3 ein getaktetes, digitales Ventil eingesetzt, so bedeutet dies, dass die Ventileinrichtung 3 ständig offen gehalten wird. Dieses ununterbrochene Bestromen in die Offenstellung wirkt sich dann negativ auf die Lebensdauer der Ventileinrichtung 3, auf den Stromverbrauch und die Geräuschemission aus.

Wie in Figur 2 dargestellt, wird beim erfindungsgemäßen Verfahren dieser Problematik dadurch begegnet, dass eine modellbasierte Berechnung des Vorratsdrucks $p_V$ aus dem Wert des Stelldrucks $p_y$, welcher über den Drucksensor 5 gemessen wird und aus einer Statusrückmeldung des Sensors 6 über die Stellung der Ventileinrichtung 3, erfolgt. In Figur 2 ist nun erkennbar, dass der vom Drucksensor 5 aufgenommene Stelldruck $p_y$ in einer ersten Berechnungseinheit 8 entsprechend verarbeitet wird. Insbesondere lässt sich aus dem Stelldruck $p_y$ und der idealen Gasgleichung ein Massenstrom $\dot{m}$ in einer modellbasierten Simulation errechnen. Aus der idealen Gasgleichung

$$p \cdot V = m \cdot R \cdot T$$

ergibt sich bei konstanten $V$, $R$, $T$ eine unmittelbare Abhängigkeit des Massenstroms $\dot{m}$ von der zeitlichen Ableitung des Drucks $\dot{m} = f(^{dp}/_{dt})$. Dabei ist das Volumen $V$ dasjenige Volumen, in welchem der Stelldruck $p_y$ gemessen wird, und die Größen $R$ und $T$ sind die spezifische Gaskonstante beziehungsweise die Temperatur in Kelvin. Die spezifische Gaskonstante ist stoffabhängig und kann, wie gegebenenfalls die Temperatur, beispielsweise der Vorratsluft, als konstant angenommen werden. Insbesondere lässt sich jedoch auch die Temperatur über eine einfache zusätzliche Sensorik erfassen oder als ein ohnehin vorhandener Temperaturwert über beispielsweise einen in der Steuerungselektronik verbundenen CAN-Bus mitverarbeiten.

In der ersten Berechnungseinheit 8 lässt sich somit der Massenstrom $\dot{m}$ ermitteln. Dieser Wert des modelbasiert simulierten Massenstroms $\dot{m}$ wird dann an eine zweite Berechnungseinheit 9 weitergegeben. In dieser Berechnungseinheit 9 wird außerdem ein über den Sensor 6 erfasster Wert über die Ventilstellung und damit der Öffnungsquerschnitt A der Ventileinrichtung 3 mitverarbeitet. Wie bereits oben erwähnt, kann dieser Wert aus einer direkten Sensorik oder konstanten Kenngrößen der Ventileinrichtung 3 in Verbindung mit beispielsweise dem Strom $I_{St}$ zur Ansteuerung der Ventileinrichtung 3, falls diese eine magnetische Ventileinrichtung ist, gewonnen werden. Bei einem entsprechenden getakteten Betrieb der Ventileinrichtung 3 kann dann außerdem das Pulsweitenverhältnis der Taktung mitberücksichtigt werden. All dies ist in der Darstellung in Figur 2 in der mit dem Bezugszeichen 6 des Sensors versehenen Box zusammengefasst, so dass in der zweiten Berechnungseinheit 9 lediglich ein direkter oder mittelbarer Wert über die Ventilstellung weiterverarbeitet wird. In dieser zweiten Berechnungseinheit 9 wird nun ein Modell berechnet, welches den Öffnungsquerschnitt der Ventileinrichtung 3 als Blende betrachtet. Aus der Durchflussgleichung für eine derartige Blende

$$Q = \alpha \cdot A \cdot \sqrt{\frac{2 \cdot \Delta p}{\rho}}$$

mit $\dot{m} = Q \cdot \rho$ ist darin wieder der in der ersten Berechnungseinheit 8 bereits modellbasiert ermittelten Massenstrom $\dot{m}$ enthalten. A ist dabei die Querschnittsfläche der Ventileinrichtung, welche über den Sensor 6 zurückgemeldet wird, Q der Durchfluss und $\alpha$ die Durchflusszahl. Die Durchflusszahl kann beispielsweise für die Ventileinrichtung empirisch bestimmt werden. Nun sind soweit alle Größen bekannt, so dass aus dem $\Delta p = p_V - p_y$ bei bereits gemessenem $p_y$ auf das $p_V$ zurückgerechnet werden kann. In der zweiten Berechnungseinheit 9 wird somit der Istdruck $p_V$ in dem Druckspeicher 2 anhand diverser realistischer Annahmen modellbasiert berechnet beziehungsweise simuliert. Der Istdruck $p_V$ in dem Druckspeicher 2 ergibt sich also aus dieser Simulation der Regelstrecke. Er kann dann der mit dem Bezugzeichen 10 bezeichneten Druckregelsoftware zur Verfügung gestellt werden, um die Regelparameter entsprechend zu verbessern. Damit lässt sich die Lebensdauer der Ventile sowie die Güte der Regelung optimieren. Außerdem kann die Führungsgröße auf den jeweils modellbasiert errechneten Istdruck $p_v$ in dem Druckspeicher 2 begrenzt werden, um eine Begrenzung des Reglers zu vermeiden.

In einem zweiten Ausführungsbeispiel wird das erfindungsgemäße Verfahren in ähnlicher Art und Weise genutzt, um bei einem zu geringen Istdruck $p_v$ im Druckspeicher 2 entsprechend reagieren zu können.

Dies ließe sich, wie oben bereits ausgeführt, einerseits über eine Berechnung des Vorratsistdrucks erfassen. Wenn dieser unter den geforderten Stelldruck $p_y$ fällt, kann rückgeschlossen werden, dass der Istdruck $p_v$ in dem Druckspeicher 2 nicht ausreicht. Es können entsprechende Gegenmaßnahmen ergriffen werden, wie beispielsweise der Start einer erneuten Befüllung des Speichers. Es sind darüber hinaus jedoch auch Maßnahmen denkbar, welche diesen Zustand als Fehler interpretieren und insbesondere zum Schutz des Systems einen entsprechenden Eingriff vornehmen. Ein derartiger Eingriff kann beispielsweise ein Abschalten des Systems oder ein Verzögern der Öffnungsintervalle der Ventileinrichtung 3 enthalten, um einer unzulässigen Erwärmung der Ventilspule und der Elektronik durch endloses Takten entgegenzuwirken. Neben dem oben bereits beschriebenen Verfahren zur Berechnung ist es analog möglich, eine zeitliche Beobachtung des Drucksignals des Stelldrucks $p_y$ und eine entsprechende Plausibilisierung über die Sensorik 6 zur Erfassung der Stellung der Ventileinrichtung 3 anzuwenden. Hierzu wird ein zeitlicher Verlauf der Signale der Sensoren 5 und 6 entsprechend aufgenommen und in der Steuereinrichtung 7 gespeichert. In der Steuereinrichtung 7 sind außerdem Referenzverläufe und/oder Referenzwerte abgelegt, welche entweder über eine Simulation ermittelt oder insbesondere über Testläufe auf Prüfständen erfasst worden sind. Diese Referenzwerte beziehungsweise Referenzverläufe können dabei verschiedene Betriebssituationen des pneumatischen Systems 1 wiederspiegeln.

Die Werte, welche gemäß des zweiten Ausführungsbeispiels über die Sensoren 5 und 6 erfasst werden, lassen sich nun mit diesen Referenzverläufen vergleichen. Sollte der erfasste Verlauf mit dem Referenzverlauf übereinstimmen, so ist eine geregelte Funktion des Systems gegeben. Das System 1 befindet sich also in einem gewollten Betriebszustand. Weicht der Verlauf von den gemessenen Referenzverläufen oder -werten ab, so kann auf eine Fehlfunktion geschlossen werden. Hierbei ist es insbesondere sinnvoll, die Referenzwerte oder Referenzverläufe mit entsprechenden Toleranzen zu versehen, um Messfehler in der üblichen Größenordnung nicht als Fehlfunktion des Systems 1 zu interpretieren. Insbesondere kann der Aufbau so gestaltet sein, dass ein erstes Toleranzband um den Referenzverlauf beziehungsweise ein erster Toleranzwert um die Referenzwerte gegeben ist. Soweit die erfassten Werte oder Verläufe innerhalb dieser Toleranz liegen, wird von einer ordnungsgemäßen Funktionalität des Systems ausgegangen. Überschreiten die Werte die Toleranz, so liegt eine entsprechende Fehlfunktion vor. Diese Information über eine Fehlfunktion kann dann genutzt werden, um einen entsprechenden Systemeingriff vorzunehmen, zum Beispiel um die Ventileinrichtung 3 entsprechend zu schützen. Alternativ oder ergänzend kann dies auch zu einer entsprechenden Warnmeldung führen, so dass beispielsweise ein Betreiber eines mit dem System 1 ausgerüsteten Fahrzeugs über die Fehlfunktion des Systems informiert wird.

Eine weitere Toleranz beziehungsweise ein weiteres Toleranzband kann zusätzlich vorgesehen werden, so dass bei einer sehr starken Abweichung von den vorgegeben typischen Verläufen oder Werten, beispielsweise bei einem zu hohen oder zu niedrigen Retarder-Bremsmoment, dann eine Notabschaltung des Systems 1 ausgelöst werden kann. Wenn es sich bei dem System 1, um ein pneumatisches System im Bereich einer Bremsanlage eines Fahrzeugs handelt, kann dies von entscheidender Bedeutung für die Sicherheit der Fahrzeugnutzer sein.

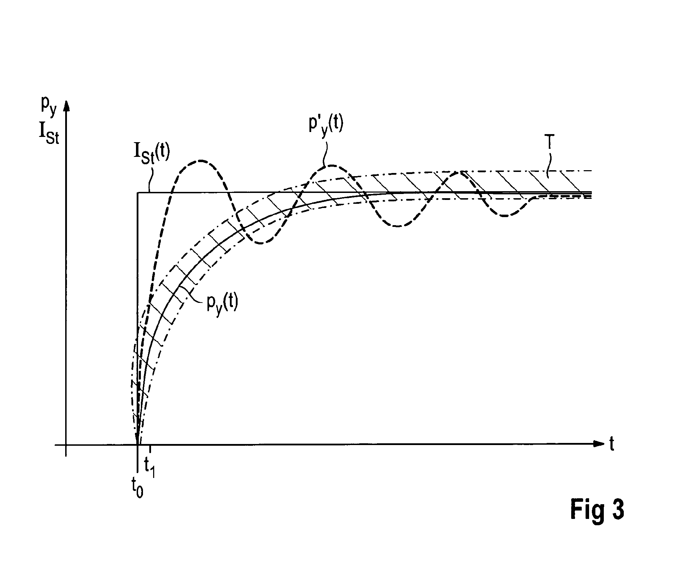

In Figur 3 ist nun beispielhaft ein solcher Verlauf des Stelldrucks $p_y$ über der Zeit $t$ dargestellt. Zum Zeitpunkt $t_0$ wird schlagartig die Ventileinrichtung 3 geöffnet, was hier durch den Verlauf des Steuerstroms $I_{st}(t)$ angedeutet ist. Die durchgezogene Linie des Stelldrucks $p_y(t)$ ist der zur erwartende normale Verlauf des Druckanstiegs, nachdem die Ventileinrichtung 3 geöffnet hat. Die gestrichelte Kurve $p'_y(t)$ stellt einen fehlerhaften Verlauf dar, welcher beispielsweise durch einen zu hohen Gegendruck, gegen den der Stelldruck $p_y$ arbeiten muss, verursacht werden kann. In der Darstellung der Figur 3 ist erkennbar, dass bereits zum Zeitpunkt $t_1$ dieser Wert $p'_y(t)$ ein mit strichpunktierten Linien begrenztes Toleranzband T um den Druckverlauf $p_y$ verlässt. Bereits zu diesem Zeitpunkt kann eine entsprechende Reaktion auf den fehlerhaften Verlauf erfolgen, so dass früh reagiert werden kann, um das System 1 zu stabilisieren, oder es zumindest in einer Art Notbetrieb noch einigermaßen sinnvoll und zuverlässig betreiben zu können.

Über dieses Grundprinzip, bei dem ein aktuell erfasster zeitlicher Verlauf mit einem oder verschiedenen vorgegebenen zeitlichen Verläufen verglichen wird, kann eine sehr umfangreiche Diagnose des Systems erfolgen. Neben der dargestellten Variante ist es insbesondere auch denkbar, Fehlverhalten vor allem im Stelldruck $p_y$ zu detektieren, welche beispielsweise mit verstopften Leitungselementen einhergehen, da diese einen Druckverlauf $p_y(t)$ verursachen, welcher außerhalb der zu erwartenden Druckverläufe liegt, welche in der Steuereinrichtung 7 entsprechend hinterlegt sind und/oder aus Simulationen oder Messungen der verschiedenen typischer Weise auftretenden Betriebszustände stammen. Neben einer Verstopfung oder funktionalen Fehlfunktion des Systems 1 können über dieses Verfahren auch Leckagen in dem System 1 erfasst werden. Hierzu reicht typischerweise die Erfassung eines Werts, insbesondere des Druckwerts über den Sensor 5 aus. Je nach Typ der Leckage wird ein unterschiedlicher Druckverlauf zu erwarten sein. Insbesondere wird eine Leckage in dem Bereich zwischen dem Druckspeicher 2 und der Ventileinrichtung 3 im Allgemeinen nicht zu einem vergleichbaren Verhalten führen, wie ein nicht ausreichender Istdruck $p_v$ im Druckspeicher 2. Eine Leckage im Bereich nach der Ventileinrichtung 3 wird ebenfalls zu einem falschen Systemverhalten beim Stelldruck $p_y$ führen, beispielsweise einem Systemdruck der sich nicht ausreichend aufbaut, zu schnell abfällt oder dergleichen. Das erfindungsgemäße Verfahren ermöglicht es also, derartige Fehler während des Betriebs festzustellen. Wie bereits erwähnt, kann über das Toleranzband T ein erster Schwellenwert festgelegt werden, bei welchem eine entsprechende Warnung sowie der Versuch gegenzuregeln ausgelöst wird. Außerdem ist es denkbar, ein zweites etwas breiteres Toleranzband einzuführen, welches hier nicht dargestellt ist. Sobald der tatsächliche erfasste Verlauf dieses breitere Toleranzband überschreitet, kann beispielsweise eine Notabschaltung des Systems 1 erfolgen.

Mit dem Verfahren lassen sich Verschleiß, Alterungen, Fehlfunktionen und durch externe Einwirkung verursachte Verstopfungen oder Leckagen entsprechend erfassen. Dabei ist es möglich, bereits in der Simulation oder der Messung am Teststand entsprechende häufig auftretende Fehlverläufe, wie beispielsweise ein zu hoher Füllstand eines mit dem Nutzsystem angesteuerten pneumatischen Systems 1 wie beispielsweise eines Retarders oder dergleichen entsprechend zu simulieren und zu hinterlegen. Wenn der gemessene Verlauf nun mit einem solchen bekannten Referenzverlauf eines bekannten Fehlers übereinstimmt, so kann neben der Tatsache, dass ein Fehler erfasst worden ist, auch auf die Art und gegebenenfalls den Ort des Fehlers zurückgeschlossen werden.

Will man einen gewissen Verschleiß und eine gewisse Alterung beispielsweise von Dichtungselementen oder eine entsprechende Alterung des Arbeitsmediums zulassen, ohne hierfür jeweils "unnötige" Warnmeldung zu generieren, so kann das System 1 auch selbstlernend ausgeführt werden.

Hierfür ist um den oder die vorgegebenen Referenzverläufe ein weiteres sehr enges Toleranzband einzuführen. Liegt ein gemessener Wert innerhalb dieses engen Toleranzbandes und insbesondere auf einer Seite der gemessenen Kurve innerhalb dieses Toleranzbandes, so kann davon ausgegangen werden, dass der Wert nach wie vor eine fehlerfreie Funktion des Systems 1 repräsentiert, jedoch einen gewissen Verschleiß oder eine gewisse Alterung des Systems beinhaltet, welche jedoch erlaubt sein soll. In diesem Fall kann der erfasste Verlauf oder der erfasste Wert den bisherigen Referenzwert ersetzen und für zukünftige Funktionen den Referenzwert darstellen. Somit kann, durch das Verfahren selbst, der Referenzwert jeweils leicht verschoben werden, um auf Alterungseffekte oder auch auf Einlaufeffekte eines neuen Systems 1 entsprechend reagieren zu können. Um ab einer bestimmten Grenze der Alterung nun dennoch einen Warnhinweis auszulösen, kann beispielsweise ein Zähler vorhanden sein, welcher zählt wie oft das System selbstlernend auf eine entsprechende Änderung reagiert. Ab einer bestimmenden Grenzzahl dieser selbstlernenden Reaktionen kann dann ein entsprechender Wert ausgegeben werden, welcher beispielsweise eine Warnmeldung oder auch einen Reset auf den ursprünglichen Referenzwert beziehungsweise Referenzverlauf enthält. Liegen die dann ermittelten Werte wieder außerhalb Toleranzbandes T, wird die Warnmeldung automatisch generiert.

Das erfindungsgemäße Verfahren ermöglicht daher in einfacher und effizienter Weise eine Verbesserung des Betriebs eines hydraulischen oder pneumatischen Systems 1 wobei diese typischerweise ohne zusätzliche Hardwarebauteile realisiert werden kann. Das Verfahren ist daher besonders gut geeignet, um in die Software einer Steuereinrichtung 7 implementiert zu werden. Dementsprechend kann das System 1 mit dem erfindungsgemäßen Verfahren zum Betreiben desselben sehr einfach auch bei bereits bestehenden Systemen 1 nachgerüstet werden.

**Patentansprüche**

1. Verfahren zum Betreiben eines hydraulischen oder pneumatischen Systems, mit

    1.1 wenigstens einem Druckspeicher;
    1.2 wenigstens einer Ventileinrichtung und einem Sensor zur zumindest mittelbaren Erfassung einer Stellung der Ventileinrichtung; und/oder 1.3 wenigstens einem Sensor zur Erfassung eines Werts, welcher zumindest mittelbar mit dem Druck auf der dem Druckspeicher abgewandten Seite der Ventileinrichtung zusammenhängt; wobei
    1.4 zumindest mit einem der Sensoren ein Wert erfasst wird; **dadurch gekennzeichnet, dass**
    1.5 der/die erfassten Wert(e) mit Referenzwerten verglichen werden; wobei
    1.6 anhand eines Übereinstimmens oder einer Differenz des/der Wert(e) und der Referenzwerte eine Fehlfunktion des Systems (1) bestimmt wird; und wobei
    1.7 zumindest einer der erfassten Werte über der Zeit mehrfach erfasst und abgespeichert wird, wobei dieser zeitliche Verlauf des wenigstens einen Wertes mit einem gespeicherten Referenzverlauf verglichen wird.

2. Verfahren nach Anspruch 1, **dadurch gekennzeichnet, dass** genau ein Wert über der Zeit mehrfach erfasst und abgespeichert wird, wobei als dieser Wert der zumindest mittelbar mit dem Druck auf der dem Druckspeicher (2) abgewandten Seite der Ventileinrichtung (3) zusammenhängende Wert gewählt wird.

**3.** Verfahren nach Anspruch 1 oder 2, **dadurch gekennzeichnet, dass** der Referenzverlauf wenigstens ein Toleranzband (T) aufweist, wobei bei einer Abweichung des erfassten Verlaufs über das erste Toleranzband (T) hinaus eine Warnmeldung generiert wird.

**4.** Verfahren nach Anspruch 3, **dadurch gekennzeichnet, dass** der Referenzverlauf wenigstens ein zweites Toleranzband aufweist, wobei bei einer Abweichung des erfassten Verlaufs über das zweite Toleranzband hinaus das System abgeschaltet wird.

**5.** Verfahren nach einem der Ansprüche 1 bis 4, **dadurch gekennzeichnet, dass** bei einer Abweichung des/der erfassten Wert(e) und/oder des erfassten zeitlichen Verlaufs um eine geringe vorgegebene Toleranz von den Referenzwerten bzw. Referenzverläufen der/die erfassten Wert(e) und/oder der erfasste zeitliche Verlauf als neuer Referenzwert gespeichert wird.

**6.** Verfahren nach einem der Ansprüche 1 bis 5, **dadurch gekennzeichnet, dass** für unterschiedliche Betriebszustände des Systems unterschiedliche Referenzwerten bzw. Referenzverläufe gespeichert bzw. vorgegeben sind.

**7.** Verfahren nach einem der Ansprüche 1 bis 16, **dadurch gekennzeichnet, dass** die/der erfasste(n) Wert(e) und/oder der erfasste zeitliche Verlauf in einem nicht-flüchtigen Speicher gespeichert wird.

**8.** Verfahren zum Betreiben eines hydraulischen oder pneumatischen Systems, mit

> 8.1 wenigstens einem Druckspeicher;
> 8.2 wenigstens einer Ventileinrichtung und einem Sensor zur zumindest mittelbaren Erfassung einer Stellung der Ventileinrichtung; und/oder
> 8.3 wenigstens einem Sensor zur Erfassung eines Werts, welcher zumindest mittelbar mit dem Druck auf der dem Druckspeicher abgewandten Seite der Ventileinrichtung zusammenhängt; wobei
> 8.4 die Werte beider Sensoren erfasst werden; **dadurch gekennzeichnet, dass**
> 8.5 die erfassten Werte mit Referenzwerten verglichen werden; wobei
> 8.6 der Druck in dem Bereich des Systems, welcher auf der dem Sensor (5) zur Erfassung eines Werts, welcher zumindest mittelbar mit dem Druck auf der dem Druckspeicher abgewandten Seite der Ventileinrichtung (3) zusammenhängt, abgewandten Seite liegt, bestimmt wird.

**9.** Verfahren nach Anspruch 8, **dadurch gekenn-**
**zeichnet, dass** in einer Regelungselektronik (7) eine Regelstrecke zur Druckregelung simuliert wird, wodurch anhand der Stellung der Ventileinrichtung (3) und des erfassten, zumindest mittelbar mit dem Druck auf der dem Druckspeicher (2) abgewandten Seite der Ventileinrichtung (3) zusammenhängenden Werts der Druck in dem Druckspeicher (2) bestimmt wird.

**10.** Verfahren nach Anspruch 9, **dadurch gekennzeichnet, dass** der bestimmte Druckwert in den Druckspeicher (2) zur Optimierung der Regelparameter genutzt wird.

**11.** Verfahren nach Anspruch 9 oder 10, **dadurch gekennzeichnet, dass** der bestimmte Druckwert in dem Druckspeicher (2) zur Begrenzung einer Führungsgröße der Regelstrecke genutzt wird.

**12.** Verwendung des Verfahrens nach einem der Ansprüche 1 bis 11 zum Betreiben eines Druckluftsystems (1) in einem Kraftfahrzeug, insbesondere einem Nutzfahrzeug.

**13.** Verwendung nach Anspruch 12, **dadurch gekennzeichnet, dass** das Druckluftsystem (1) zur Steuerung einer Bremsanlage des Fahrzeuges, insbesondere zur Betätigung einer Ventilvorrichtung zur zumindest mittelbaren Befüllung eines hydrodynamischen Retarders, dient.

**Claims**

**1.** A method for operating a hydraulic or pneumatic system, having

> 1.1 at least one pressure accumulator;
> 1.2 at least one valve device and one sensor for at least indirect detection of a setting of the valve device; and/or
> 1.3 at least one sensor for detecting a value which is at least indirectly related to the pressure on the side of the valve device facing away from the pressure accumulator;
> 1.4 a value being detected using at least one of the sensors; **characterized in that**
> 1.5 the detected value or values is/are compared to reference values;
> 1.6 a malfunction of the system (1) is determined on the basis of a correspondence or a difference of the value or values and the reference values; and
> 1.7 at least one of the detected values is detected multiple times over time and stored, this time curve of the at least one value being compared to a stored reference curve.

**2.** The method according to Claim 1, **characterized in that** precisely one value is detected and stored multiple times over time, the value related at least indirectly to the pressure on the side of the valve device (3) facing away from the pressure accumulator (2) being selected as this value.

**3.** The method according to Claim 1 or 2, **characterized in that** the reference curve has at least one tolerance band (T), a warning message being generated in the event of a deviation of the detected curve beyond the first tolerance band (T).

**4.** The method according to Claim 3, **characterized in that** the reference curve has at least one second tolerance band, the system being shut down in the event of a deviation of the detected curve beyond the second tolerance band.

**5.** The method according to one of Claims 1 to 4, **characterized in that** in the event of a deviation of the detected value or values and/or the detected time curve by a slight predefined tolerance from the reference values or reference curves, the detected value or values and/or the detected time curve is stored as the new reference value.

**6.** The method according to one of Claims 1 to 5, **characterized in that** different reference values or reference curves are stored or predefined for different operating states of the system.

**7.** The method according to one of Claims 1 to 16, **characterized in that** the detected value or values and/or the detected time curve is stored in a nonvolatile memory.

**8.** A method for operating a hydraulic or pneumatic system, having

8.1 at least one pressure accumulator;
8.2 at least one valve device and one sensor for at least indirectly detecting a setting of the valve device; and/or
8.3 at least one sensor for detecting a value which is at least indirectly related to the pressure on the side of the valve device facing away from the pressure accumulator;
8.4 the values of both sensors being detected; **characterized in that**
8.5 the detected values are compared to reference values;
8.6 the pressure is determined in the area of the system which is on the side facing away from the sensor (5) for detecting a value which is at least indirectly related to the pressure on the side of the valve device (3) facing away from the pressure accumulator.

**9.** The method according to Claim 8, **characterized in that** a controlled system for pressure regulation is simulated in regulating electronics (7), whereby the pressure in the pressure accumulator (2) is determined on the basis of the setting of the valve device (3) and the detected value which is at least indirectly related to the pressure on the side of the valve device (3) facing away from the pressure accumulator (2).

**10.** The method according to Claim 9, **characterized in that** the established pressure value in the pressure accumulator (2) is used to optimize the regulating parameters.

**11.** The method according to Claim 9 or 10, **characterized in that** the established pressure value in the pressure accumulator (2) is used to limit a reference variable of the controlled system.

**12.** A use of the method according to one of Claims 1 to 11 for operating a compressed air system (1) in a motor vehicle, in particular a utility vehicle.

**13.** The use according to Claim 12, **characterized in that** the compressed air system (1) is used to control a brake system of the vehicle, in particular to actuate a valve device for at least indirectly filling a hydrodynamic retarder.

**Revendications**

**1.** Procédé pour exploiter un système hydraulique ou pneumatique, avec

1.1 au moins un accumulateur de pression ;
1.2 au moins un dispositif de soupape et un capteur permettant la détection au moins indirecte d'une position du dispositif de soupape ; et/ou
1.3 au moins un capteur permettant de détecter une valeur, qui dépend au moins indirectement de la pression exercée sur le côté du dispositif de soupape opposé à l'accumulateur de pression ; où
1.4 une valeur est détectée au moins par l'un des capteurs; caractérisé en ce
1.5 la ou les valeur(s) détectée(s) est/sont comparée(s) à des valeurs de référence ; où
1.6 l'on détermine un dysfonctionnement du système (1) selon qu'il y a coïncidence ou non entre la/les valeur(s) et les valeurs de référence; et où
1.7 au moins l'une des valeurs détectées est détectée et mémorisée plusieurs fois dans le temps, où l'on compare cette courbe chronologique de ladite au moins une valeur à une courbe de référence mémorisée.

**2.** Procédé selon la revendication 1, **caractérisé en ce qu'**une valeur exactement est détectée et mémorisée plusieurs fois dans le temps, où l'on choisit comme valeur la valeur dépendant au moins indirectement de la pression exercée sur le côté du dispositif de soupape (3) opposé à l'accumulateur de pression (2).

**3.** Procédé selon les revendications 1 ou 2, **caractérisé en ce que** la courbe de référence présente au moins une bande de tolérance (T), où un message d'alerte est généré en présence d'un écart de la courbe détectée par rapport à la première bande de tolérance (T).

**4.** Procédé selon la revendication 3, **caractérisé en ce que** la courbe de référence présente au moins une seconde bande de tolérance, où le système est arrêté en présence d'un écart de la courbe détectée par rapport à la seconde bande de tolérance.

**5.** Procédé selon l'une quelconque des revendications 1 à 4, **caractérisé en ce que** la ou les valeur(s) détectée(s) et/ou la courbe chronologique détectée est/sont mémorisée(s) comme nouvelle valeur de référence, en présence d'un écart de la ou des valeur(s) et/ou de la courbe chronologique détectée, écart correspondant à une tolérance minime prédéterminée par rapport aux valeurs de référence ou aux courbes de référence.

**6.** Procédé selon l'une des revendications 1 à 5, caractérisé en ce différentes valeurs de référence ou courbes de référence sont mémorisées ou fournies pour permettre différents modes d'exploitation du système.

**7.** Procédé selon l'une des revendications 1 à 16, caractérisé en ce la ou les valeur(s) détectée(s) et/ou la courbe chronologique détectée sont mémorisées dans une mémoire non-volatile.

**8.** Procédé pour exploiter système hydraulique ou pneumatique, avec

8.1 au moins un accumulateur de pression ;
8.2 au moins un dispositif de soupape et un capteur permettant la détection au moins indirecte d'une position du dispositif de soupape ;
8.3 au moins un capteur permettant de détecter une valeur, qui dépend au moins indirectement de la pression exercée sur le côté du dispositif de soupape opposé à l'accumulateur de pression ; où
8.4 les valeurs des deux capteurs sont détectées ;
caractérisé en ce
8.5 les valeurs détectées sont comparées à des valeurs de référence ; où
8.6 l'on détermine la valeur dans la zone du système situé sur le côté opposé du capteur (5) permettant de détecter une valeur qui dépend au moins de la pression exercée sur le côté du dispositif de soupape (3) opposé à l'accumulateur de pression.

**9.** Procédé selon la revendication 8, **caractérisé en ce qu'**une plage de réglage permettant de réguler la pression est simulée dans un circuit électronique de régulation (7), afin de déterminer la pression à l'intérieur de l'accumulateur de pression (2), à l'aide de la position du dispositif de soupape (3) et de la valeur détectée et dépendant au moins indirectement de la pression exercée sur le côté du dispositif de soupape opposé à l'accumulateur de pression (2).

**10.** Procédé selon la revendication 9, **caractérisé en ce que** l'on utilise la valeur de pression déterminée dans l'accumulateur de pression pour optimiser les paramètres de réglage.

**11.** Procédé selon les revendications 9 ou 10, **caractérisé en ce que** l'on utilise la valeur de pression déterminée dans l'accumulateur de pression (2) pour limiter une grandeur de guidage de la plage de réglage.

**12.** Utilisation du procédé selon l'une quelconque des revendications 1 à 11, permettant d'utiliser un circuit à air comprimé (1) dans un véhicule automobile, en particulier un véhicule utilitaire.

**13.** Utilisation selon la revendication 12, **caractérisée en ce que** le circuit à air comprimé (1) permet de commander le système de freinage du véhicule, en particulier pour actionner un dispositif à soupape afin de remplir au moins indirectement un retardateur hydrodynamique.

Fig. 1

Fig. 2

Fig 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004059835 A1
- WO 2005066006 A1
- DE 19757655 A1
- DE 19757594 A1
- DE 102005056939 A1